# EUROPEAN PATENT APPLICATION

(11) **EP 0 797 116 A1**
(43) Date of publication of application: **24.09.1997**
(21) Application number: 97104108.2
(22) Date of filing: 12.03.1997
(51) Int. Cl.: G02B 7/02, G09F 9/33, H01L 25/16

(54) **Stackable optical elements**

(30) Priority: 21.03.1996 US 620096
(71) Applicant: MOTOROLA, INC., Schaumburg, IL 60196 (US)
(72) Inventor: Lebby, Michael S., Apache Junction, Arizona 85219 (US); Richard, Fred V., Scottsdale, Arizona 85260 (US); Jachimowicz, Karen E., Laveen, Arizona 85339 (US)
(74) Representative: Gibson, Sarah Jane

(57) **Abstract**

A stackable optical system (50) including at least two optical elements (12 & 14), each having a specific optical property or combination of optical properties (16) formed therein or on a surface (13, 15, 17 & 19) defining the optical element (12 & 14). The optical elements (12 & 14) being formed to cooperatively align and having connections to attach the elements one to another. The optical elements (12 & 14) being aligned to receive a generated image and produce an easily viewable image. The specific optical properties (16) formed in or on the optical elements (12 & 14) chosen being dependent upon the desired resultant image. The stackable optical system (50) capable of being used within an image generation apparatus (88), such as an electro-optical package (40) and/or positioned externally on a portable electronic device (80).

## Description

### Field of the Invention

The present invention pertains to optical elements and more specifically to the formation and stacking of multiple optical elements for use in optical magnification/correction systems.

### Background of the Invention

At the present time, because of the surge in the popularity of communication and visual devices, there are many applications for image manifestation apparatus which require the use of optical magnification/correction systems to magnify and/or correct a small generated image and produce an easily viewable virtual image which can be seen by the user. With this surge in popularity there exists the need for portable electronic devices incorporating the ability to display quasi-direct view images and/or virtual images that utilize optical systems, composed of optical elements, that vary in the combination of element or lens type, degree of magnification and/or correction, as well as overall element or lens size, shape and configuration.

Light emitting devices (LEDs) have been fabricated in arrays including large numbers of LEDs and utilized in image generation apparatus to produce virtual images. In creating these types of devices, and/or image manifestation apparatus, there exists the need to incorporate an optical magnification/correction system, within the device itself as a component of the image manifestation apparatus, and/or mounted externally to the device, such as on the exterior of a portable electronic device, for magnifying and/or correcting the generated complete image, thereby producing an easily viewable virtual image. This is achieved by utilizing an optical magnification/correction system that is generally composed of a plurality of optical elements positioned in place by optical mounting structures.

Of greatest concern when utilizing an optical magnification/correction system, either integral with the image manifestation apparatus, such as in an electro-optical package, or mounted externally to a portable electronic device, is to minimize the size of the components utilized, therefore enabling the overall size of the electro-optical package and the portable electronic device to maintain minimal size restrictions. An optical magnification/correction system is therefore desired which is capable of being produced in such a manner as to provide increased, decreased, or progressive, correction with each additional optical element. Furthermore, an optical magnification/correction system is desired in which the optical elements are stackable and attached, or connected, one to another, therefore minimizing size requirements, for use in electro-optical packages or mounted externally on a portable electronics device in which magnification and/or correction of a generated image is desirable.

Generally, optical magnification/correction systems known today which are used in magnifying and/or correcting complete images, such as those referred to here for producing an easily viewable virtual image, require separate optical elements that are attached to separate mounting structures. The mounting structures, or "cages" as they are commonly known in the art, are expensive to manufacture and assemble and can be cumbersome to handle. In using this type of common mounting structure, the optical element or elements are positioned cooperatively within the mounting structure or structures, either being interchangeable within the mounting structure or fixedly attached, and positioned to magnify/correct the generated complete image and produce an easily viewable virtual image. Of greatest concern in using mounting structures or "cages" of this type, is not only the size requirement, but the complexity of the formation and the required manufacturing process for forming the mounting structure and forming an optical element for placement and use within the mounting structure. The result is an overall bulky electro-optical package incorporating an optical magnification/correction system that when mounted on the interior of the portable electronics device fails to maintain overall compactness and when the optical magnification/correction system is mounted on the exterior of the device is not user friendly in overall design.

Thus, it would be highly desirable to provide for an optical system containing a plurality of optical elements, that in various stacked combinations work to achieve the proper magnification and/or correction sought by the user in magnifying and/or correcting a generated complete image into an easily viewable virtual image.

Accordingly, it is a purpose of the present invention to provide an optical system that allows for the formation of a plurality of molded optical elements that are capable of being stacked and attached or connected together according to the degree of magnification/correction sought by the user for use with portable electronics equipment.

It is a still further purpose of the present invention to incorporate a plurality of optical elements, each being of a specific shape and/or magnification/correction that acting in combination serve to magnify/correct an image.

It is another purpose of the present invention to provide for a method of forming an optical system combed of a plurality of molded optical elements that can be stacked one to another to form a complete optical magnification/correction system for use in magnifying/correcting generated complete images.

It is still another purpose of the present invention to provide an optical magnification/correction system, capable of magnifying/correcting complete images generated by portable electronic equipment, that is substantially simpler to assemble, amenable to high volume production and less costly to manufacture.

### Summary of the Invention

The above problems and others are substantially solved and the above purposes and others are realized in a stackable optical system capable of magnifying and/or correcting a received complete image to produce an easily viewable virtual image, including a means for stacking and attaching a plurality of optical elements, one to another, and mounting within and/or on an exterior of a portable electronic device. The optical system incorporates a plurality of specific optical properties, such as diffractive, refractive, reflective, or a combination of two or more of these properties, molded and/or formed into the optical elements, for magnifying and/or correcting the received complete image and producing an easily viewable image, such as a virtual image. Specifically, what is disclosed is to provide a plurality of stackable optical elements that have provided a means for attachment to each other as well as a means for attachment to an electro-optical package contained within a portable electronics device or to the exterior of a portable electronic device.

The optical magnification/correction system of the present invention is composed of a first optical element and at least one additional optical element, that in combination serve to magnify and/or correct the complete image received from an image generation apparatus, and produce an easily viewable virtual image. The individual optical elements of the optical system include a simple mating scheme and means for connection one to another utilizing press or snap-fit connections, adherence of one to another with an optically transparent material, such as optically transparent epoxy, threading one to another with threaded connections, or some other convenient attachment or connection method that does not interfere or distort the generated image passing therethrough.

### Brief Description of the Drawings

The novel features believed characteristic of the invention are set forth in the claims. The invention itself, however, as well as other features and advantages thereof will be best understood by reference to detailed descriptions which follow, when read in conjunction with the accompanying drawings, wherein:
FIG. 1 is a greatly enlarged sectional view of a first optical element, having an upper major surface to which a second optical element is adhered utilizing optically transparent epoxy, or the like;
FIG. 2 is a greatly enlarged sectional view of a first optical element, having an upper major surface to which a second optical element is attached, and having a third optical element attached to an upper major surface of the second optical element, utilizing dove-tail snap-fit protrusions and cooperating openings molded in the optical elements;
FIG. 3 is a is a simplified sectional view of the components of an electro-optical package, having a plurality of stackable optical elements of the present invention attached to a mounting substrate, assembled into a complete package;
FIG. 4 is a simplified schematic view of a 2F miniature waveguide virtual image display incorporating the stackable optical elements of the present invention;
FIG. 5 is a simplified schematic view of a 3F miniature waveguide virtual image display incorporating the stackable optical elements of the present invention;
FIG. 6 is a view in perspective of a portable communications receiver incorporating the stackable optical elements of the present invention; and
FIG. 7 is a simplified view generally as seen from the line 7-7 of FIG. 6.

### Description of the Preferred Embodiment

During the course of this description, like numbers are used to identify like elements according to the different figures that illustrate the invention. It should be understood that a wide variety of optical element, or lens, shapes, sizes and types, as well as the degree of separation between the optical elements, can be used throughout the following description. Accordingly, numerous possibilities will be disclosed, but it should be understood that various other combinations of optical element shape, size, type, and separation could be interchanged dependent upon the magnification and/or correction sought. In addition, light emitting devices, including liquid crystal displays (LCDs), light emitting diodes (LEDs), vertical cavity surface emitting lasers (VCSELs), etc., can be utilized in the generation of a complete image, but light emitting diodes, as being used to generated the complete image, will be utilized where applicable throughout the following description for simplicity.

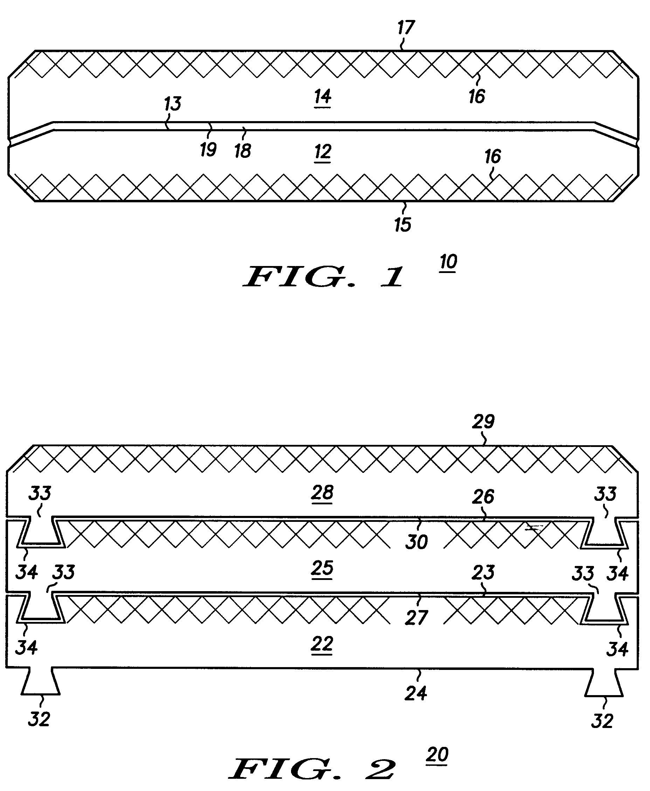

Referring specifically to FIG. 1, a greatly enlarged sectional view of a first embodiment of a stackable optical system 10, composed of a first optical element 12, formed of an optically transparent material such as molded optically transparent plastic, defining a lower major surface 15 and an upper major surface 13 and a second optical element 14, formed of an optically transparent material such as molded optically transparent plastic, defining an upper major surface 17 and a lower major surface 19. Lower major surface 19 of optical element 14 is adhered to upper major surface 13 of optical element 12 utilizing an optically transparent adhesive material, such as optically transparent epoxy 18, or the like. First optical element 12 and second optical element 14 are formed having at least one optical property formed therein, e.g., diffractive, refractive, and/or reflective, and serve as magnification and/or correction elements. Generally, optical system 10 serves to receive a generated image and produce an easily viewable image, such as an easily viewable virtual image. More specifically, first optical element 12 and second optical element 14 of optical system 10 are illustrated in FIG. 1 as being optical lenses having refractive properties molded into optical elements 12 and/or 14 at the time of formation, i.e., formed having a proper curvature or being planar in shape. In addition, it is disclosed that dependent upon the combination of optical elements utilized, optical elements 12 and 14 can have additional optical properties, i.e., diffractive, and/or reflective, as well as having no specific optical property formed therein. As shown in FIG. 1, first optical element 12 is formed having a diffractive optical grating 16 on lower major surface 15 and second optical element 14 is formed having a diffractive optical grating 16 on upper major surface 17, optical gratings 16 being molded at the time of formation of optical elements 12 and 14 or stamped onto surfaces 15 and/or 17 of optical elements 12 and/or 14, subsequent to the molding of optical elements 12 and 14.

Optical system 10 is comprised of at least two optical elements, such as first optical element 12 and second optical element 14, being formed so as to be stackable, one on top of another. More specifically, as illustrated in FIG. 1, second optical element 14 is formed to cooperatively stack on upper major surface 13 of first optical element 12. First optical element 12 and second optical element 14 are attached to each other utilizing any convenient means for attachment or connection. Illustrated in FIG. 1 is lower major surface 19 of second optical element 14 attached to upper major surface 13 of first optical element 12 using an optically transparent epoxy 18. In addition it is disclosed to utilize other means for attachment, such as snap-fit connections (discussed presently), threaded connections, or the like. It should be understood that for best results first optical element 12, second optical element 14 and optically transparent epoxy 18 should be constructed with indices of refraction which are as close together as practical. If, for example, the index of refraction of first optical element 12, second optical element 14 and optically transparent epoxy 18 differs substantially there is a tendency for light to reflect back and the efficiency of optical system 10, and when formed integral an electro-optical package (discussed presently), the efficiency of the electro-optical package, is reduced. Generally, an index of refraction of approximately 1.5 for first optical element 12, second optical element 14 and optically transparent epoxy 18 has been found to be acceptable.

Referring now to FIG. 2, illustrated is a greatly enlarged sectional view of a second embodiment of an optical system 20, composed of a first optical element 22, defining a first upper major surface 23 and a second opposed lower major surface 24, a second optical element 25, defining a first upper major surface 26 and a second opposed lower major surface 27, and a third optical element 28, defining a first upper major surface 29 and a second opposed lower major surface 30. As illustrated first optical element 22 has positioned thereon and attached to upper major surface 23, a second optical element 25. Optical system 20 further has third optical element 28 positioned thereon and attached to upper major surface 26 of second optical element 25. It should be understood that the separation between optical elements 22 and 25 and between optical elements 25 and 28 need not be small, or equal in magnitude. Optical elements 22, 25 and 28 are disclosed as utilizing dove-tail shaped, snap-fit connections, composed of a plurality of snap-fit protrusions 33 and cooperating openings 34 molded in the optical elements, whereby protrusions 33 are formed of a material that will allow for flexibility so as to easily snap-fit into openings 34. More specifically, optical elements 22 and 25 are illustrated having formed on lower major surfaces 24 and 27, a plurality of snap-fit protrusions 33, which cooperatively join a plurality of similarly shaped openings 34 molded into upper major surfaces 23 and 26 of first optical element 22 and second optical element 25. Third optical element 28 has formed on lower major surface 30 snap-fit protrusions 33 to attach third optical element 28 to second optical element 25. The upper major surface of third optical element 28 is substantially smooth, having no protrusions formed thereon, in that it is the uppermost optical element in optical system 20. It should be understood that any number of optical elements can be attached together in the optical systems of the present invention, dependent upon the degree of magnification and/or correction sought by the user. In addition, it should be understood that while any number of optical elements can be attached together to form the stackable optical system of the present invention, the optical properties of each element must cooperatively work together to achieve the desired resultant image.

As previously described for optical system 10, illustrated in FIG. 1, a plurality of optical properties and/or gratings, or combinations thereof, are formed into first optical element 22, second optical element 25 and third optical element 28 at the time of molding formation or subsequent thereto. Surfaces 23, 24, 26, 27, 29 and 30 may have any number of optical properties formed therein, including a refractive surface with some radius of curvature, a diffractive surface with diffractive structures built on or molded into the surface, a reflective surface, or any combination thereof.

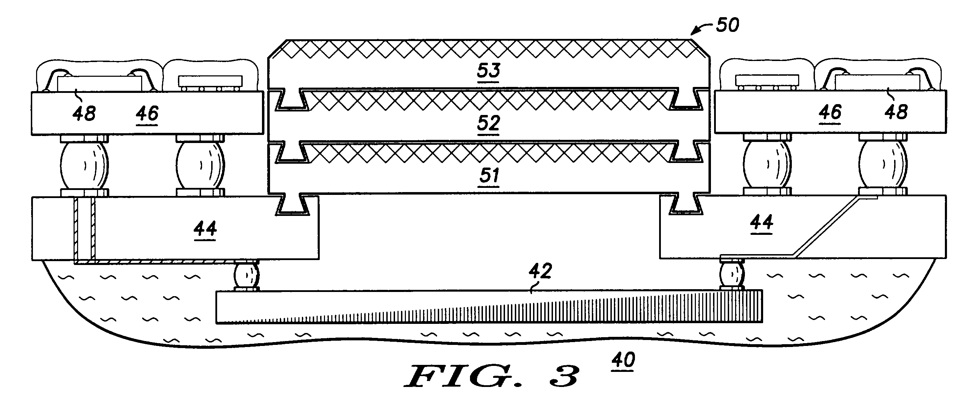

The optical system of the present invention is generally used in magnifying and/or correcting a received complete image to produce an easily viewable virtual image. More specifically, the optical system of the present invention is intended for use with portable electronic equipment, either encased within the device as a component of an electro-optical package during the manufacturing process and/or positioned on an exterior of the portable electronic equipment, easily adjustable by the user of a specific device. Illustrated in FIG. 3 is a simplified sectional view of the components of an integrated electro-optical package 40, which would be encased within a portable electronic device, having a plurality of stackable optical elements of the optical system of the present invention as a component of the completely assembled electro-optical package 40. Electro-optical package 40 is intended for use in portable electronic devices and is generally similar to that disclosed in U.S. Patent No. 5,432,358, entitled "INTEGRATED ELECTRO-OPTICAL PACKAGE", issued July 11, 1995, assigned to the same assignee and incorporated herein by this reference. Electro-optical package 40 as illustrated in FIG. 3 is composed of a light emitting device display chip 42, a mounting substrate 44, a driver board 46, a plurality of driver and control circuits 48 and optical system 50. It should be understood that various other configurations of electro-optical package 40 are intended to be included by this disclosure, specifically electro-optical packages formed without driver board 46, with the basic premise being the same for all configurations, namely the electro-optical package being composed of a plurality of electrical and optical components, such as those illustrated in FIG. 3.

More specifically, electro-optical package 40 is composed of a semiconductor chip, or light emitting device display chip 42, having a major surface with an array of light emitting devices (not shown) formed thereon, cooperating to generate a complete image. The light emitting devices of light emitting device display chip 42 each having first and second electrodes for activating the light emitting devices, the light emitting devices being positioned in rows and columns to define all pixels of the complete image when activated, at a central portion of the major surface. Mounting substrate 44 has formed therein either a central optically transparent central light passage or "window", or a central opening therethrough, formed substantially coextensive or axially aligned with the complete image generated by light emitting device display chip 42. In this specific embodiment, light emitting device display chip 42 is bump bonded to mounting substrate 44. The plurality of driver and control circuits 48 are connected to the light emitting devices of light emitting device display chip 42 through mounting substrate 44. In addition, it is disclosed to incorporate a driver board into electro-optical package 40 if desired. Electro-optical package 40 further has data input terminals connected to data output terminals of the electronic device and control signal output terminals adapted to be connected to the first and second electrodes of the light emitting devices of light emitting device display chip 42 for activating the light emitting devices to generate complete images in accordance with data signals applied to the data input terminals.

Optical system 50 of electro-optical package 40 is composed of at least two optical elements, illustrated in FIG. 3 as being composed of a first optical element 51, a second optical element 52 and a third optical element 53. Optical system 50 is generally similar to optical system 20, previously disclosed and illustrated in FIG. 2. First optical element 51 of electro-optical package 40 is mounted on mounting substrate 44, utilizing snap-fit connections (previously discussed). Alternatively, an optically transparent adhesive material, such as epoxy can be utilized, as disclosed with reference to optical system 10, illustrated in FIG. 1, as well as threaded connections, and/or any other suitable means for attaching or connecting the optical elements together that does not interfere or have adverse effects upon the generated image. Mounting substrate 44 has illustrated a central opening, but it should be understood that mounting substrate 44, alternatively, can have formed in a central portion thereof, an optically transparent "window" or light passage, and/or a molded optical element (not shown) through which the image generated by light emitting device display chip 42 must initially pass, prior to passing through optical system 50. Optical system 50 is disclosed as being an integral part of electro-optical package 40, being positioned onto mounting substrate 44 at the time of manufacture of electro-optical package 40, or in the alternative, a component which is added to electro-optical package 40, subsequent to the manufacturing of electro-optical package 40.

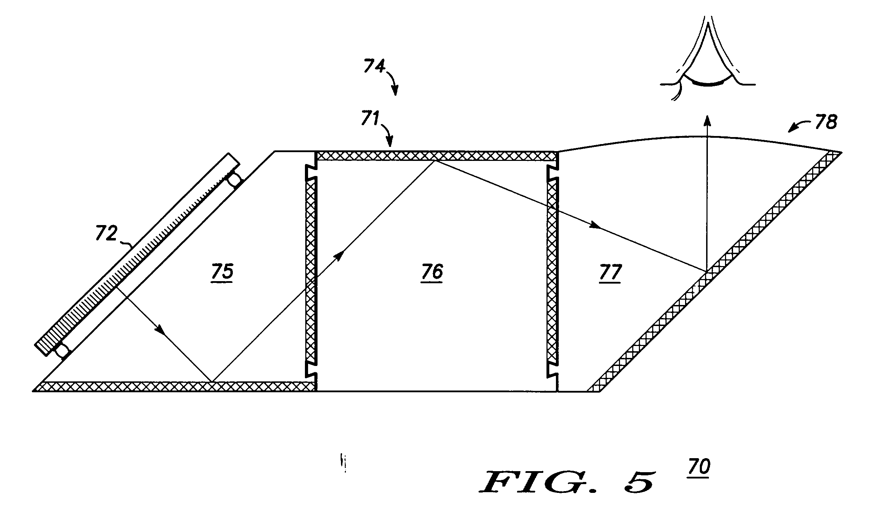

With regard to the disclosed embodiment of electro-optical package 40, it should be understood that the image generated by the light emitting device display chip 42 is too small to properly perceive (fully understand) with the human eye and generally requires a magnification of at least 10x for comfortable and complete viewing. The disclosed optical system embodiments can be formed to provide the complete magnification required by the user. Several examples of optical magnification systems which may be incorporated into an electro-optical package and/or applied externally to a portable electronic device are illustrated in FIGS. 4 through 7, explained below.

Referring to FIG. 4, a miniature waveguide virtual image display 60 is illustrated in a simplified schematic view incorporating the stackable optical elements of the present invention. Miniature waveguide virtual image display 60 is described as being a 2F, or two fold, waveguide through which the generated image passes. The arrows shown in FIG. 4 are for illustrative purposes only, showing the transmission path of the emitted light. Miniature waveguide virtual image display 60 includes image generation apparatus 62, similar to electro-optical package 40 described above, which may or may not incorporate a stackable optical system as an integral part of electro-optical package 40, for providing an image on a surface 63. An optical system 64, represented by first optical element 65, second optical element 66, third optical element 67 and fourth optical element 68, is positioned in spaced relation to surface 63 of miniature waveguide virtual image display 60 and produces an easily viewable virtual image viewable by an eye spaced from an aperture 69 defined by optical system 64. As technology reduces the size of the electro-optical package and/or the light generating devices contained within, greater magnification and smaller lens systems are required.

Optical system 64, represented schematically by optical elements 65, 66, 67 and 68, is mounted in spaced relation from surface 63 so as to receive the image from surface 63 and magnify and/or correct it an additional predetermined amount. It will of course be understood that optical system 64 may be adjustable for focus and additional magnification, if desired, or may be fixed in a housing for simplicity.

Eye relief is the distance that the eye can be positioned from viewing aperture 69 and still properly view the image. Because of the size of optical system 64, eye relief is sufficient to provide comfortable viewing and in the present embodiment is great enough to allow a viewer to wear normal eyeglasses, if desired. Because of the improved eye relief the operator can wear normal corrective lenses (personal eyeglasses), and the complexity of focusing and other adjustable features can be reduced, therefore, simplifying the construction of miniature waveguide virtual image display 60.

In miniature waveguide virtual image display 60, image generation apparatus 62 is affixed to the inlet of an optical waveguide 61 for providing an image thereto. Optical waveguide 61 is formed generally in the shape of a parallelogram (side view) with opposite sides formed by optical elements 65 and 68 being equal and parallel but not perpendicular to adjacent sides formed by optical elements 65, 66, 67 and 68. Optical element 65 defines the inlet and directs light rays from the image at image generation apparatus 62 onto a predetermined area on adjacent side of optical element 65 generally along an optical path defined by all four optical elements. In this example, two reflective/diffractive surfaces are formed on optical elements 65 and 68, at predetermined areas and the magnified virtual image is viewable at an outlet formed by a refractive surface in optical element 68, through aperture 69. This particular embodiment illustrates a display in which the overall size is reduced somewhat and the amount of material in the waveguide is reduced to reduce weight and material utilized.

Referring to FIG. 5, another specific miniature waveguide virtual image display, being a 3F, or three fold, waveguide, is illustrated in a simplified schematic. In miniature waveguide virtual image display 70 an optical waveguide 71 having a generally parallelogram shape in side elevation is utilized. Image generation apparatus 72, similar to electro-optical package 40 described above, for producing an image, is affixed to a first optical element 75 of optical waveguide 71 and emanates light rays which travel along an optical path directly to a reflective/diffractive surface formed on a surface of first optical element 75. Light rays are reflected from the surface of first optical element 75 to a reflective/diffractive surface formed on a second optical element 76. The reflective/diffractive surface of second optical element 76 in turn reflects the light rays through a final reflective/diffractive and refractive surface formed on a third optical element 77 to the outlet of optical waveguide 71 in optical element 77, defining a viewing aperture 78 for miniature waveguide virtual image display 70.

As illustrated in FIGS. 4 and 5, optical systems 64 and 74 are formed of a plurality of stackable optical elements that are snap-fit connected one to another. Alternatively, as previously disclosed, the plurality of stackable optical element which comprise optical systems 64 and 74 of the disclosed embodiments can be mounted using any convenient mating technique, such as an optically transparent adhesive material, and/or threaded connections, that would not interfere with the image emitted by the image generation apparatus.

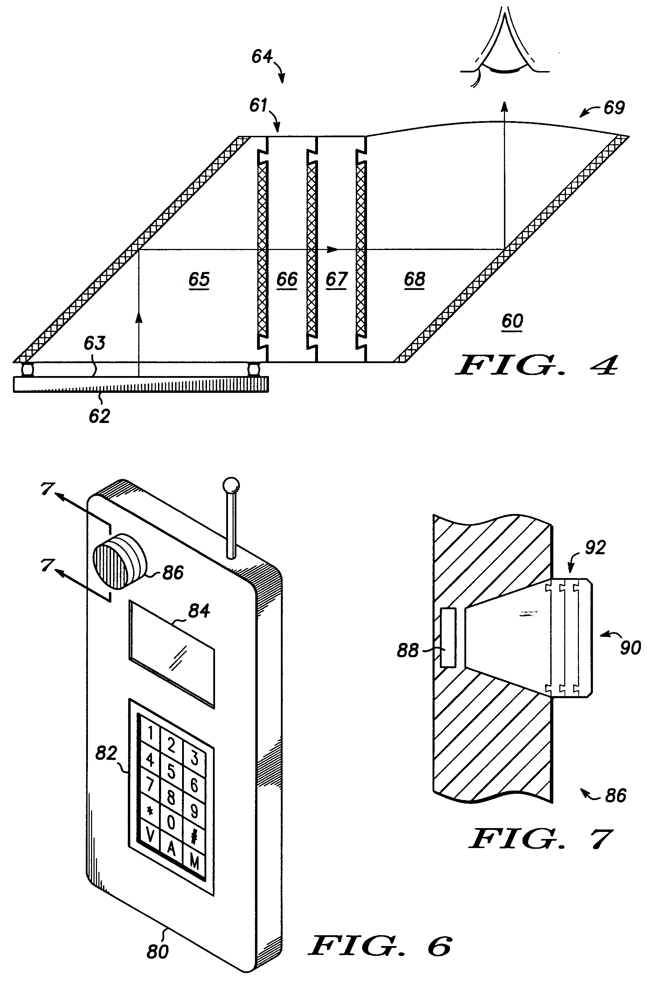

FIG. 6, illustrates an example of a portable electronic device, namely portable communications equipment, such as a portable communications receiver 80, having a miniature waveguide virtual image display 86 mounted therein. It is disclosed that a hand held microphone (not shown) is optional and this specific embodiment is desirable for instances where a hand held microphone is not utilized or not available or for use in pagers and the like which do not transmit. It will of course be understood that portable communications receiver 80 can be any of the well known portable receivers, such as a cordless or cellular telephone, a two-way radio, a pager, a data bank, a television remote control, etc. In the present embodiment, for purposes of explanation only, portable communications receiver 80 is a portable two-way police radio, generally the type carried by police officers on duty or security guards. Portable communications receiver 80 includes a control panel 82 for initiating calls and a standard visual display 84, if desired, for indicating the number called or the number calling.

Referring to FIG. 7, a simplified sectional view of miniature waveguide virtual image display 86, as seen from the line 7 - 7 of FIG. 6, is illustrated. Miniature waveguide virtual image display 86 includes an electro-optical package, similar to electro-optical package 40, described above, which may or may not include a stackable optical system of the present invention, having an image generation apparatus 88 for providing an image to an externally mounted stackable optical system 92, which in turn produces a virtual image viewable by the operator through an aperture 90. Optical system 92 is constructed to magnify the entire image from image generation apparatus 88, so that the virtual image viewable through aperture 90 is a complete frame, or picture, which appears to be very large (generally the size of a printed page) and is easily discernible by the operator. The entire electro-optical package and optical system 92 are relatively small and add virtually no additional space requirements to portable communications receiver 80. Optical system 92 is constructed to include the option of interchanging, removing or adding optical elements, dependent upon the desired resultant image and has no additional moving parts, other than optional features such as focusing, zoom lenses, etc.

It should be noted that in the prior art, pagers and other small receivers in which visual displays are desired, are especially handicapped by the size of the displays. Generally such displays are limited to a single short line of text or several digits, and the size of the display still dictates the size of the receiver. In the present invention, an optical system provides for the magnification and/or correction of a generated image, while maintaining minimal size requirements, thus the display is clearer and easier to read and, because it utilizes a virtual display, requires very little power for the operation thereof.

Thus, the present invention illustrates and teaches stackable optical elements, that in combination can form a complete optical system or partial optical system. The optical system of the present invention is to be utilized in integrated electro-optical packages generally having a plurality of electrical and optional additional optical components, that are not limited in size by the electrical connections and the optics and which are substantially smaller than previous integrated packages which perform the same functions. In addition, the present invention illustrates and teaches an optical system that is capable of being mounted externally on a portable electronic device, and that is capable of being interchanged and/or adjusted dependent upon magnification and/or correction sought by the user of the device.

While we have shown and described specific embodiments of the present invention, further modifications and improvements will occur to those skilled in the art. We desire it to be understood, therefore, that this invention is not limited to the particular forms shown and we intend in the appended claims to cover all modifications that do not depart from the spirit and scope of this invention.

## Claims

1. A stackable optical system characterized by:
a first optical element (12) formed of an optically transparent material, having at least a first major surface (13) and a second major surface (15) and having at least one optical property (16) formed therein;
at least one additional optical element (14) formed of an optically transparent material, having at least a first major surface (19) and a second major surface (17), and having at least one optical property (16) formed therein, cooperatively aligned with the first optical element (12); and
a means for attachment of the first optical element (12) to the at least one additional optical element (14), thereby aligning the first optical element (12) and the at least one additional optical element (14) to receive a generated image and produce an easily viewable image.

2. A stackable optical system as claimed in claim 1 further characterized in that the first optical element (12) is formed having at least one of a diffractive property, a refractive property and a reflective property.

3. A stackable optical system as claimed in claim 2 further characterized in that the at least one additional optical element (14) is formed having at least one of a diffractive property, a refractive property and a reflective property.

4. A stackable optical system as claimed in claim 3 wherein the means for attachment of the first optical element (12) and the at least one additional optical element (14) is further characterized by a plurality of snap-fit connections (33 & 34).

5. A stackable optical system as claimed in claim 3 wherein the means for attachment of the first optical element (12) and the at least one additional optical element (14) is further characterized by an optically transparent adhesive material (18).

6. A stackable optical system as claimed in claim 3 wherein the means for attachment of the first optical element (12) and the at least one additional optical element (14) is further characterized by a threaded connection.

7. A stackable optical system as claimed in claim 1 wherein the means for attachment of the first optical element (12) to the at least one additional optical element (14) is further characterized by a plurality of snap-fit protrusions (33) and cooperatively formed openings (34) formed in the first optical element (12) and the at least one additional optical element (14).

8. A stackable optical system as claimed in claim 1 further characterized in that the optically transparent material is plastic.

9. A stackable optical system as claimed in claim 1 further characterized in by being integrated into a visual display in a portable electronic device (80).

10. A stackable optical system as claimed in claim 9 further characterized in that the portable electronic device is one of a cellular telephone, a two-way radio, a data bank, a television remote control, and a pager.
